# EUROPEAN PATENT SPECIFICATION

(11) **EP 3 135 474 B1**
(45) Date of publication and mention of the grant of the patent: **24.02.2021**
(21) Application number: 16189316.9
(22) Date of filing: 21.12.2009
(51) Int. Cl.: B29L 31/30, B32B 5/26, B32B 5/28, B29C 70/30

(54) **IMPROVED COMPOSITE MATERIALS**
VERBESSERTE VERBUNDWERKSTOFFE
MATÉRIAUX COMPOSITES AMÉLIORÉS

(30) Priority: 07.01.2009 GB 0900090
(43) Date of publication of application: 01.03.2017
(62) Divisional of application: 09795533.0
(73) Proprietor: Hexcel Composites Limited, Duxford, Cambridgeshire CB22 4QD (GB)
(72) Inventor: CAWSE, John, Tavistock, Devon PL19 8HE (GB); HADLEY, Philip, Duxford, Cambridgeshire CB22 4QB (GB)
(74) Representative: TLIP Limited

(56) References cited:
- WO-A1-2004/009924
- WO-A1-2008/147754
- US-A1- 2008 277 057
- US-B1- 6 764 754

## Description

### Technical field

The invention relates to a method of forming curable composite laminate vehicle body shell components having sound damping properties.

### Background

Composite materials have well-documented advantages over traditional construction materials, particularly in providing excellent mechanical properties at very low material densities. As a result, the use of such materials is becoming increasingly widespread and their application ranges from "industrial" and "sports and leisure" to high performance aerospace components.

Prepregs, comprising a fibre arrangement impregnated with resin such as epoxy resin, are widely used in the generation of such composite materials. Typically a number of plies of such prepregs are "laid-up" as desired and the resulting assembly, or laminate, is placed in a mould and cured, typically by exposure to elevated temperatures, to produce a cured composite laminate.

However, such composite materials, particularly thin, low density, high stiffness composites, have a tendency to resonantly vibrate in applications involving the passage of fluid, typically a gas, past their surface. Such vibration can reduce the service lifetime of the composites and also can generate a significant amount of noise, which is a particular issue in passenger aircraft applications.

In modern jet powered aircraft, the major contributing factor to noise within the passenger cabin during cruise is the turbulent boundary layer excitation of air passing the airframe at high speed. The pressure fluctuations on the surface initiate vibrations in the fuselage structures and these vibrations are transmitted into the cabin as broadband noise.

As the use of composite materials in the aircraft structure increases, the problem of noise generation becomes more acute. There are a number of ways of tackling this problem, however the most common involves damping the vibrations, involving conversion of the vibrational energy to heat.

A known method of damping composite materials is to apply a viscoelastic layer to the structure once formed, so that it deforms with the composite structure during vibration. The viscous properties of the viscoelastic layer dissipate the vibration by converting it to heat. A development of this technique involves placing a rigid layer, known as a constraining layer, on top of the viscoelastic layer. This has the effect that the viscoelastic layer deforms in shear, increasing its energy absorption capacity. There are commercially available so-called constrained layer damping products involving rubber and aluminium layers.

US 2006/0208135 involves attaching the constrained viscoelastic laminate to a structural member which is itself attached to the composite.

However, whilst the techniques of constrained layer damping are very effective at reducing noise they involve a large increase in the weight of the composite, typically involving a doubling of the weight when the underlying composite is only a few millimetres in thickness, as is quite common in passenger aircraft. Also, the applied layer must conform to the body structure, which may not be possible in highly curved or convex regions.

Attempts have been made to introduce damping layers as an internal part of the composite structure. US 5,487,928 discloses a fibre-reinforced laminate comprising alternating layers of structural layers interleaved with viscoelastic layers.

US 6,764,754 suggests a particular type of interleaving which involves creating a curable laminate with alternating stacks of multiple damping layers and multiple structural layers.

However, such structures tend to be very thick because of the large number of layers and the mechanical strength of the cured laminates is far less than it would be without the damping layers being present.

US 2008/0277057 discloses replacing part of the structural fuselage with a viscoelastic damping element surrounded by structural elements.

It would therefore seem that so-called passive approaches to noise damping must inevitably involve a significant weight increase, with constrained layer damping being the only practical solution for passenger aircraft.

More elaborate systems have been suggested, involving piezoelectric sensors which activate piezoelectric activators to cancel out the detected vibration. These can be effective in certain localised areas of an aircraft, however they are unsuitable for large area body coverage in view of their cost and associated supporting electronics and future maintenance issues.

There is therefore a need in the art for a more convenient method of introducing noise dampening, particularly for use over a large area, given the significant drawbacks involved in known approaches.

### Summary of invention

In a first aspect, the present invention relates to a method of constructing a laminate vehicle body shell component, comprising forming a damping prepreg or semipreg comprising a sheet-like curable prepreg or semipreg comprising resin and structural fibres having intimately contacted thereto a damping layer, wherein the damping layer is formed by immersing a fibrous open web material in a solution of damping material and removing the solvent by evaporation, laying down the damping prepreg or semipreg, and forming the damping prepreg or semipreg into the eventual shape of the body shell component; either before or after, laying down additional fibre structural layers to form a curable laminate vehicle body shell component, so that the ratio of the number of fibre structural layers to damping layers in the curable laminate vehicle body shell component is at least 3:1 and so that the presence of adjacent structural layers effectively provides the constraining layer for the damping layer, then exposing the laminate to elevated temperature and optionally elevated pressure, thereby to cure the laminate to produce the laminate vehicle body shell component.

It has been found that providing a body shell made of a curable laminate comprising a majority of structural layers with only a minority of damping layers provides a cured structure which can have noise damping properties as good as post-cure constrained layer damping techniques at only a fraction of the increased weight. Additionally, a wide range of body shell arrangements can be covered regardless of their curvature, as the laminate is uncured. Furthermore, known issues with impairment of mechanical integrity are minimised or eliminated by only having a minority of damping layers.

The presence of adjacent structural layers effectively provides the constraining layer for the damping layer. The invention can therefore be viewed as providing a constrained layer damping solution integrated into a pre-cure laminate, carrying with it all of the above-mentioned advantages.

The damping layer(s), when the laminate is cured, may be characterised as a material having at least one, preferably at least two, more preferably all three of the following properties: a glass transition temperature (Tg) of from -100°C to 100°C, preferably from -80°C to 0°C; a tan δ peak in the range of from -60°C to 100°C, preferably from -30°C to 50°C; and a loss modulus peak (E") extending over a temperature range of at least 30°C, preferably over a range of at least 60°C.

In contrast, the structural layers, when the laminate is cured, may be characterised as a material having at least one, preferably at least two, more preferably all three or more of the following properties: a Tg of from 100°C to 300°C; a tan δ peak in the range of from 100°C to 400°C, preferably from 150°C to 300°C; and a loss modulus peak extending over a temperature range of less than 30°C.

The damping properties are effective with only very few damping layers, preserving the mechanical integrity of the laminate. Thus, the ratio of structural to damping layers is preferably from 3:1 to 50:1, more preferably from 5:1 to 20:1.

Although applicable to a wide variety of situations, the invention is particularly suited where the laminate is relatively thin, as such composites are prone to vibration and are relatively lightweight. Thus, preferably at least 50% of the structural layers have a thickness of from 0.1 to 1.0 mm, preferably from 0.15 to 0.5 mm. Ideally at least 80%, or even substantially all the structural layers have this thickness.

The laminate also therefore preferably has a thickness of from 1.0 to 10.0 mm, preferably from 1.0 to 5.0 mm and more preferably from 1.5 to 3.0 mm.

The laminate may comprise thermoset resin in a variety of types and forms. For example, resin may be present as discrete layers between fibre layers. Typically however, resin is prepregged into the structure of the fibre layers, although some fibre layers could potentially be left "dry" as desired in a so-called semipreg arrangement. Resin may be present in patterns or as layers, the choice of design being at the discretion of the person skilled in the art.

The curable thermoset resin of the structural layer may be selected from those conventionally known in the art, such as resins of phenol formaldehyde, ureaformaldehyde, 1, 3, 5-triazine-2, 4, 6-triamine (Melamine), bismaleimide, epoxy resins, vinyl ester resins, benzoxazine resins, polyesters, unsaturated polyesters, cyanate ester resins, or mixtures thereof. Epoxy resins are particularly preferred. Curing agents and optionally accelerators may be included as desired.

The fibres of the structural layers may take a wide variety of forms and be made from a wide range of suitable materials. The fibres may be unidirectional or woven in a multi-directional arrangement, or non-woven, as desired according to the requirements of the intended application. A preferred arrangement is to use unidirectional fibres and arrange the structural layers so that they alternate their fibre direction, to form a quasi isotropic assembly. Other ply stacking arrangements can be adopted depending on the specific application of the component.

The fibres may be made from carbon fibre, glass fibre or organic fibres such as aramid.

The damping layer typically comprises a further thermosetting material and may take any of a variety of suitable forms, provided it has the physical properties sufficient to cause damping. The damping layer is preferably substantially or completely uncured. This preferably the further thermosetting material is substantially or even completely uncured. In a preferred embodiment the damping layer comprises a rubber, particularly those based on the monomer units butyl, chlorobutyl, isoprene, chloroprene, butadiene, styrene and acrylonitrite. Nitrile rubbers are a preferred rubber.

Alternatively or additionally, the damping layer may comprise a curable resin material which can be the same or similar to that used in the structural layers, as described above. Typically the resin will need additives in order for it to perform as a damping layer.

The damping layer may comprise a wide variety of additives, including fillers, other polymers, plasticisers, flexibilisers, extenders, softeners and tackifiers. Examples of fillers includes carbon black, mica, graphite and chalk. Fillers with a layered structure such as mica are beneficial because they enhance the damping properties of the layer.

Damping layers may also comprise a fibrous reinforcement structure as described above, to aid handling. However it is believed that such a structure may interfere with its damping properties and so this is ideally kept to a minimum. Thus, preferably the damping layer comprises from 0 to 50 wt % fibre, preferably from 5 wt % to 35 wt %, more preferably up to 20 wt %. However a damping layer with no fibre reinforcement may be the most preferred.

As the presence of damping layers is believed to be detrimental to the mechanical properties of the laminate, if there are multiple damping layers present then these are preferably not in contact with each other. Thus it is preferred that the laminate comprises no more than four damping layers adjacent to each other, preferably no more than three, more preferably no more than two and most preferably no damping layers are adjacent to each other.

Additionally the laminate preferably has no more than five damping layers in total, preferably no more than four, more preferably no more than three, most preferably no more than two. In a preferred embodiment the laminate contains a single damping layer.

As the laminate according to the invention avoids the introduction of unnecessary weight, the laminate may extend over a substantial area of the vehicle body. Thus, the curable laminate preferably has a surface area of at least 1.0 m², more preferably at least 2.0 m², most preferably at least 5.0 m².

Additionally, the laminate is ideally suited for use as an aircraft body shell component, in view of this lightweight nature.

Preferably the additional fibre structural layers are laid down after the damping prepreg or semipreg.

The laminate or curable prepreg or semipreg may be cured by exposure to elevated temperature and optionally elevated pressure by means of any suitable known method, such as vacuum bag, autoclave or press cure to produce a rigid body shell.

The invention will now be illustrated, by way of example, with reference to the following figures, in which:-
Figure 1 is a schematic representation, in exploded form, of a pre-cured laminate according to the invention.
Figure 2 is a schematic representation of a cured laminate according to the invention.
Figure 3 is a schematic representation of a damping prepreg according to the invention.

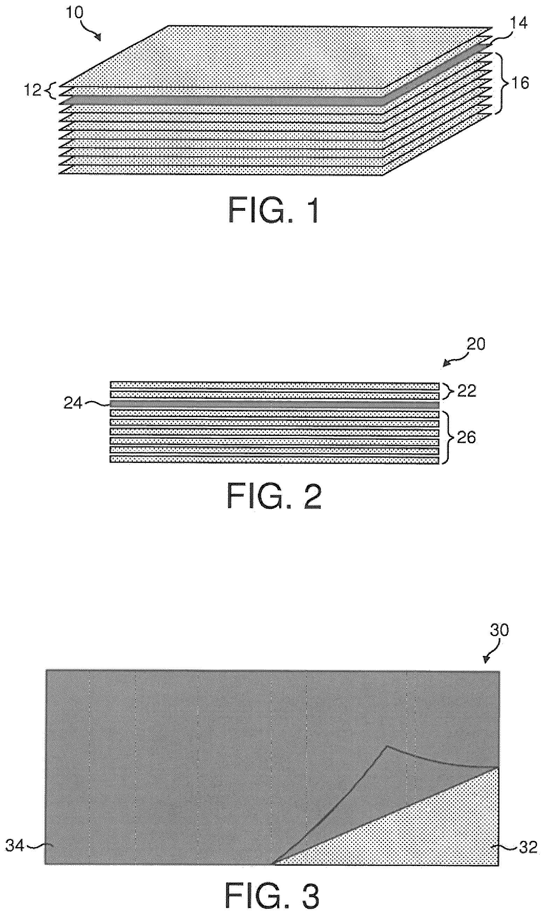

Referring to the figures, Figure 1 shows a laminate 10 comprising two upper structural layers 12, a damping layer 14, and eight lower structural layers 16.

The structural layers 12, 16 comprise unidirectional carbon fibre reinforcement layers prepregged with a curable epoxy resin. The alignment of the fibres is alternated to provide a 0°/90° lay-up. Each structural layer has a thickness of 0.2 mm.

The damping layer 14 comprises a curable and uncured nitrile rubber impregnated into a carbon fibre woven sheet, and has a thickness of 0.4 mm.

The laminate 10 therefore has a thickness of 2.4 mm.

Figure 2 shows a cured laminate 20 comprising two upper structural layers 22, a damping layer 24 and six structural layers 26. The laminate 20 forms a component of a vehicle body shell and provides sound damping properties as well as suitable material properties.

Figure 3 shows damping prepreg 30 comprising a sheet of prepreg 32 having intimately contacted thereto a damping layer 34. The prepreg 32 comprises unidirectional carbon fibre reinforcement prepregged with epoxy resin. The direction of the fibres can be seen in Figure 3, which for illustration purposes only, shows the damping layer 34 peeled back from prepreg 32.

The damping prepreg may be supplied on a roll and deployed in known manner to form a vehicle body shell or other component. Typically further structural layers will be layed down, e.g. additional prepreg or semipreg layers, to produce a suitably strong laminate when cured.

### Example 1, not according to the invention

An uncured nitrile rubber compound (E10956NBR Black, Berwin, UK) was pressed at room temperature in a hydraulic press to give a sheet with an areal weight approximately 310 g/m². This rubber layer was then applied to a ply of a unidirectional aerospace grade prepreg M21E/34%/268/IMA (Hexcel, UK) and assembled into an eight ply UD laminate with the rubber layer between plies two and three of the assembly. The prepreg stack was cured into a laminate using the prepreg manufacturer's recommended cure cycle - a vacuum bag, autoclave cure with an ultimate cure time of 2 h at 180°C. The laminate formed appeared to have good dimensional stability. It was cut to form a test specimen measuring 120 mm × 42.5 mm. The test specimen was suspended from two adjacent corners by applying bulldog clips. Cotton string was attached to the clips and the specimen was then suspended in a test chamber. A miniature accelerometer (Model 352C22, PCB Piezoelectronics) was affixed firmly to the centre of the rear of the panel and this was connected via an analogue to digital converter to a PC running the signal analysis software (SignalCalc Ace™ by Data Physics).

An instrumented hammer (Model 086C01, PCB Piezoelectronics), again connected to the PC was used to strike the front of the panel directly in the centre. The test was carried out at room temperature. The initial excitation of the panel and its continuing resonance were recorded for analysis.

A frequency domain plot was generated via a Fast Fourier Transformation of the time domain signal from the accelerometer located on the test piece. The first major resonant mode of the panel was determined from this frequency response function. The first major resonant mode of this panel was found at about 1300 Hz. Although subsequent damping treatments changed the precise frequency of this resonance, it was easy to identify for analysis each time.

The dynamic signal analysis software was used to report the damping of the laminate at this frequency. This was calculated using the bandwidth (half power) method. Each test was repeated three times and the signal averaged. Results were compared to a control laminate with no damping layer element.

**Table 1**

| | **Control** | **Invention** | **Smacsonic™** |
|---|---|---|---|
| **Weight (kg/m²)** | 3.28 | 4.00 | 6.43 |
| **Damping value** | 0.89% | 4.90% | 4.25% |
| **Thickness (mm)** | 2.09 | 2.40 | 3.85 |

Results were also compared to a commercially available damping treatment, Smacsonic™ from Smac (Toulon, France). A test specimen was produced by covering a similar sized test specimen to that above with the aluminium backed Smacsonic® constrained layer damping element.

The damping values at ∼ 1300 Hz, together with weight and thickness data are shown in Table 1. It can be seen that the laminate according to the invention provides an excellent damping response for only a small increase in weight and thickness.

### Example 2

A solution/dispersion of an uncured rubber compound (E10956NBR Black, Berwin, UK) was produced in methyl ethyl ketone at a solids concentration of approximately 7.5%. A damping layer according to the invention was produced by impregnating a 20 g/m² random carbon veil (Optimat 203 from Technical Fibre Products) with this solution/dispersion to yield a supported, uncured elastomeric element with areal weight of approximately 190 g/m². This structure was layered onto and intimately contacted with a prepreg as used in Example 1 and was included within a laminate structure of such prepregs as in Example 1, which was then cured and tested as previously described.

This laminate had a thickness and areal weight of 2.29 mm and 3.47 kg/m² respectively and gave a damping value of 2.64% at -1300 Hz. As can be seen by comparing to the results above, this represents a 210% improvement in damping over the control laminate with no significant change in weight or thickness.

### Example 3

A solution/dispersion of an uncured rubber compound (E10956NBR Black, Berwin, UK) was produced in MEK at a concentration of approximately 7.5%. A constrained layer damping element was produced by impregnating a 4 g/m² polyester veil (T2570/01 from Technical Fibre Products, UK) with this solution/dispersion to yield a supported uncured elastomeric element with areal weight of approximately 50 g/m². Light pressure and moderate temperature were used to intimately affix this lightweight supported damping layer to a ply of M21E UD carbon prepreg (Hexcel, UK). This wholly integral structure was included in a laminate structure and cured & tested as described above. The cured laminate had a thickness of 2.21 mm and a weight of 3.33 kg/m² and gave a damping value of 1.39%) at ∼ 1300 Hz. Being intimately associated with the uncured prepreg, this example should be particularly amenable to processing using currently available technologies such as Automatic Tape Laying (ATL).

## Claims

1. A method of constructing a laminate vehicle body shell component, comprising forming a damping prepreg or semipreg comprising a sheet-like curable prepreg or semipreg comprising resin and structural fibres having intimately contacted thereto a damping layer, wherein the damping layer is formed by immersing a fibrous open web material in a solution of damping material and removing the solvent by evaporation, laying down the damping prepreg or semipreg, and forming the damping prepreg or semipreg into the eventual shape of the body shell component; either before or after, laying down additional fibre structural layers to form a curable laminate vehicle body shell component, so that the ratio of the number of fibre structural layers to damping layers in the curable laminate vehicle body shell component is at least 3:1 and so that the presence of adjacent structural layers effectively provides the constraining layer for the damping layer, then exposing the laminate to elevated temperature and optionally elevated pressure, thereby to cure the laminate to produce the laminate vehicle body shell component.

2. A method according to claim 1, wherein the additional fibre structural layers are laid down after the damping prepreg or semipreg.

3. A method according to claim 1 or claim 2, wherein the ratio of fibre structural layers to damping layers is from 3:1 to 50:1, preferably from 5:1 to 20:1.

4. A method according to any of the preceding claims, wherein at least 50%, preferably at least 80% or even substantially all, of the fibre structural layers of the curable laminate vehicle body shell component have a thickness of from 0.1 to 1.0 mm, preferably from 0.15 to 0.5 mm.

5. A method according to any one of the preceding claims, wherein the curable laminate vehicle body shell component has a thickness of from 1.0 to 10.0 mm, preferably from 1.0 to 5.0 mm, more preferably from 1.5 to 3.0 mm.

6. A method according to any one of the preceding claims, wherein the damping layer comprises a further thermosetting material.

7. A method according to claim 6, wherein the further thermosetting material is substantially or completely uncured.

8. A method according to any one of the preceding claims, wherein the damping layer is substantially or completely uncured.

9. A method according to any one of the preceding claims, wherein the curable laminate vehicle body shell component comprises no more than four damping layers adjacent to each other.

10. A method according to any one of the preceding claims, wherein the curable laminate vehicle body shell component has no more than five damping layers in total.

## Patentansprüche

1. Verfahren zum Aufbau einer Laminat-Fahrzeugrohbaukomponente, umfassend das Bilden eines Dämpfungs-Prepregs oder Semipregs, das ein folienartiges härtbares Prepreg oder Semipreg umfasst, das Harz und Strukturfasern umfasst, die eng mit einer Dämpfungsschicht in Kontakt stehen, wobei die Dämpfungsschicht durch Eintauchen eines faserigen offenen Bahnmaterials in einer Lösung aus Dämpfungsmaterial und Entfernen des Lösungsmittels durch Verdampfung, Legen des Dämpfungs-Prepregs oder Semipregs und Formen des Dämpfungs-Prepregs oder Semipregs in die endgültige Form der Rohbaukomponente gebildet wird; entweder vorher oder nachher das Legen zusätzlicher Faserstrukturschichten zur Bildung einer härtbaren Laminat-Fahrzeugrohbaukomponente, so dass das Verhältnis der Anzahl der Faserstrukturschichten zu den Dämpfungsschichten in der härtbaren Laminat-Fahrzeugrohbaukomponente mindestens 3:1 beträgt und so dass das Vorhandensein benachbarter Strukturschichten effektiv die Begrenzungsschicht für die Dämpfungsschicht bereitstellt, danach das Aussetzen des Laminats einer erhöhten Temperatur und optional einem erhöhten Druck, damit das Laminat gehärtet wird, um die Laminat-Fahrzeugrohbaukomponente herzustellen.

2. Verfahren nach Anspruch 1, wobei die zusätzlichen Faserstrukturschichten nach dem Dämpfungs-Prepreg oder Semipreg gelegt werden.

3. Verfahren nach Anspruch 1 oder Anspruch 2, wobei das Verhältnis von Faserstrukturschichten zu Dämpfungsschichten 3:1 bis 50:1, vorzugsweise 5:1 bis 20:1 beträgt.

4. Verfahren nach einem der vorhergehenden Ansprüche, wobei mindestens 50%, vorzugsweise mindestens 80% oder sogar im Wesentlichen alle der Faserstrukturschichten der härtbaren Laminat-Fahrzeugrohbaukomponente eine Dicke von 0,1 bis 1,0 mm, vorzugsweise von 0,15 bis 0,5 mm aufweisen.

5. Verfahren nach einem der vorhergehenden Ansprüche, wobei die härtbare Laminat-Fahrzeugrohbaukomponente eine Dicke von 1,0 bis 10,0 mm, vorzugsweise von 1,0 bis 5,0 mm, bevorzugter von 1,5 bis 3,0 mm aufweist.

6. Verfahren nach einem der vorhergehenden Ansprüche, wobei die Dämpfungsschicht ein weiteres wärmehärtbares Material umfasst.

7. Verfahren nach Anspruch 6, wobei das weitere wärmehärtbare Material im Wesentlichen oder vollständig ungehärtet ist.

8. Verfahren nach einem der vorhergehenden Ansprüche, wobei die Dämpfungsschicht im Wesentlichen oder vollständig ungehärtet ist.

9. Verfahren nach einem der vorhergehenden Ansprüche, wobei die härtbare Laminat-Fahrzeugrohbaukomponente nicht mehr als vier nebeneinander liegende Dämpfungsschichten umfasst.

10. Verfahren nach einem der vorhergehenden Ansprüche, wobei die härtbare Laminat-Fahrzeugrohbaukomponente insgesamt nicht mehr als fünf Dämpfungsschichten aufweist.

## Revendications

1. Procédé de construction d'un composant de caisse de véhicule stratifié, comprenant la formation d'un pré-imprégné ou semi-imprégné d'amortissement comprenant un pré-imprégné ou semi-imprégné durcissable en forme de feuille comprenant une résine et des fibres structurelles possédant une couche d'amortissement intimement en contact avec celles-ci, ladite couche d'amortissement étant formée en immergeant un matériau en bande ouvert fibreux dans une solution de matériau d'amortissement et en retirant le solvant par évaporation, la pose du pré-imprégné ou semi-imprégné d'amortissement, et la formation du pré-imprégné ou semi-imprégné d'amortissement dans la forme finale du composant de caisse ; soit avant, soit après, la pose de couches structurelles de fibres supplémentaires pour former un composant de caisse de véhicule stratifié durcissable, afin que le rapport du nombre de couches structurelles de fibres sur celui des couches d'amortissement dans le composant de caisse de véhicule stratifié durcissable soit supérieur ou égal à 3:1 et afin que la présence de couches structurelles adjacentes fournisse efficacement la couche de contrainte pour la couche d'amortissement, l'exposition ensuite du stratifié à une température élevée et éventuellement à une pression élevée, pour ainsi durcir le stratifié afin de produire le composant de caisse de véhicule stratifié.

2. Procédé selon la revendication 1, lesdites couches structurelles de fibres supplémentaires étant déposées après le pré-imprégné ou semi-imprégné d'amortissement.

3. Procédé selon la revendication 1 ou 2, ledit rapport des couches structurelles de fibres sur les couches d'amortissement allant de 3:1 à 50:1, de préférence de 5:1 à 20:1.

4. Procédé selon l'une quelconque des revendications précédentes, au moins 50 %, de préférence au moins 80 % ou même pratiquement la totalité, des couches structurelles de fibres du composant de caisse de véhicule stratifié durcissable possédant une épaisseur allant de 0,1 à 1,0 mm, de préférence de 0,15 à 0,5 mm.

5. Procédé selon l'une quelconque des revendications précédentes, ledit composant de caisse de véhicule stratifié durcissable possédant une épaisseur allant de 1,0 à 10,0 mm, de préférence de 1,0 à 5,0 mm, idéalement de 1,5 à 3,0 mm.

6. Procédé selon l'une quelconque des revendications précédentes, ladite couche d'amortissement comprenant un matériau thermodurcissable supplémentaire.

7. Procédé selon la revendication 6, ledit matériau thermodurcissable supplémentaire étant sensiblement ou complètement non durci.

8. Procédé selon l'une quelconque des revendications précédentes, ladite couche d'amortissement étant sensiblement ou complètement non durcie.

9. Procédé selon l'une quelconque des revendications précédentes, ledit composant de caisse de véhicule stratifié durcissable ne comprenant pas plus de quatre couches d'amortissement adjacentes les unes aux autres.

10. Procédé selon l'une quelconque des revendications précédentes, ledit composant de caisse de véhicule stratifié durcissable ne possédant pas plus de cinq couches d'amortissement au total.
